Europäisches Patentamt

European Patent Office

Office européen des brevets

(11) Numéro de publication: **0 359 125**

**A1**

## (12) DEMANDE DE BREVET EUROPEEN

(21) Numéro de dépôt: 89116536.7

(22) Date de dépôt: 07.09.89

(51) Int. Cl.⁵ **H02H 9/02**

(30) Priorité: 12.09.88 FR 8811865

(43) Date de publication de la demande:
**21.03.90 Bulletin 90/12**

(84) Etats contractants désignés:
**AT BE CH DE ES FR GB GR IT LI LU NL SE**

(71) Demandeur: **GEC ALSTHOM SA**
**38, avenue Kléber**
**F-75116 Paris(FR)**

(72) Inventeur: **Van Pham, Doan**
**8, Impasse Magendie**
**F-69330 Meyzieu(FR)**
Inventeur: **Collet, Michel**
**25, rue de France**
**F-69100 Villeurbanne(FR)**
Inventeur: **Dupraz, Jean-Pierre**
**7, rue Moissonier**
**F-69003 Lyon(FR)**
Inventeur: **Bekhaled, Mohamed**
**62, rue des Vignes**
**F-90800 Bavilliers(FR)**

(74) Mandataire: **Weinmiller, Jürgen et al**
**Lennéstrasse 9 Postfach 24**
**D-8133 Feldafing(DE)**

(54) **Disjoncteur à courant continu à haute tension.**

(57) L'invention concerne un disjoncteur à courant continu à haute tension.

Elle a pour objet un disjoncteur à courant continu à haute tension, destiné à être inséré entre un premier (P) et un second point (Q) d'une ligne (L) à couper en série dotée d'un disjoncteur (D) classique de faible pouvoir de coupure, caractérisé en ce qu'il comprend un cryostat (1) possédant pour chacune des polarités de ligne, une première (3) et une seconde traversée (4) comprenant chacune au moins deux amenées élémentaires de courant (31, 32, 41, 42) reliées deux à deux à l'intérieur du cryostat par un premier (51) et un second (52) élément supraconducteur, les amenées de la première traversée étant directement reliées a l'extérieur de la traversée audit premier point de ladite ligne à couper, les amenées de la seconde traversée étant reliées à l'extérieur de la traversée au même second point de ladite ligne, l'une au moins directement, l'une au moins des autres par l'intermédiaire d'un interrupteur (60).

Application à la coupure des courants continus.

## Disjoncteur à courant continu à haute tension

La présente invention concerne un disjoncteur à courant continu à haute tension.

On connaît les grandes difficultés qui existent pour couper un courant continu à haute tension qui, à l'inverse du courant alternatif, ne passe pas par zéro à chaque cycle.

Les propriétés des supraconducteurs de présenter une résistance nulle dans certaines conditions de température et de transiter très rapidement vers un état résistif, lorsque la valeur du courant qui les traverse dépasse une valeur dite courant critique, offre des perspectives intéressantes pour la réalisation de disjoncteurs ou limiteurs de courant cryogénique.

Ainsi la présente invention a pour objet un disjoncteur à courant continu à haute tension, destiné à être inséré entre un premier et un second point d'une ligne a couper en série dotée d'un disjoncteur classique de faible pouvoir de coupure, caractérisé en ce qu'il comprend un cryostat possédant pour chacune des polarités de ligne, une première et une seconde traversée comprenant chacune au moins deux amenées élémentaires de courant reliées deux à deux à l'intérieur du cryostat par un premier et un second élément supraconducteur, les amenées de la première traversée étant directement reliées à l'extérieur de la traversée audit premier point de ladite ligne à couper, les amenées de la seconde traversée étant reliées a l'extérieur de la traversée au même second point de ladite ligne, l'une au moins directement, l'une au moins des autres par l'intermédiaire d'un interrupteur.

De préférence une résistance de faible valeur est montée en parallèle sur l'interrupteur.

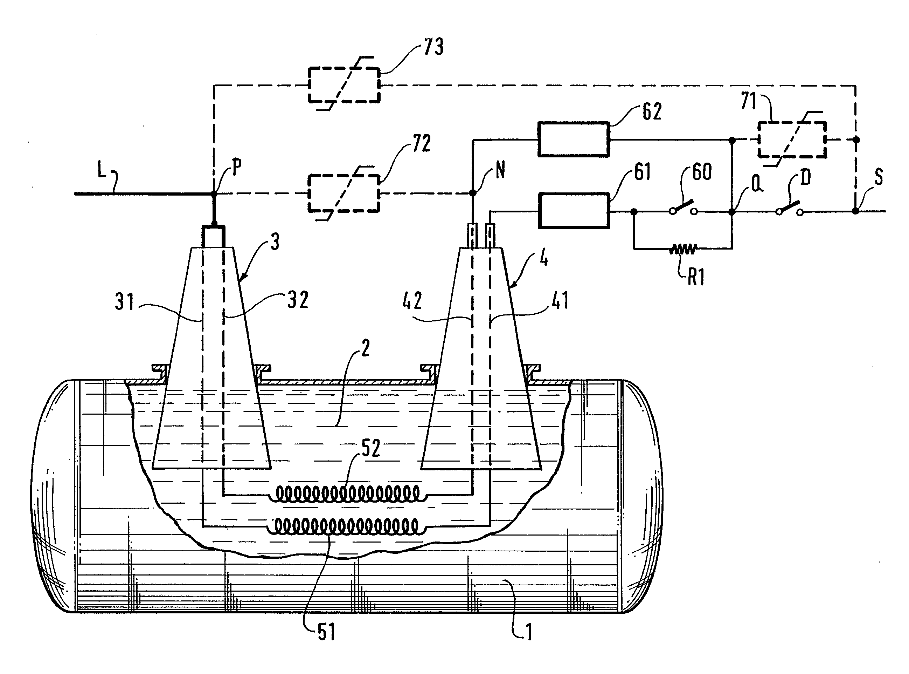

L'invention est expliquée en détail dans la description ci-après d'un exemple de disjoncteur à deux bobinages supraconducteurs la figure unique est une représentation schématique d'un tel disjoncteur.

Dans la figure, la référence 1 désigne une cuve d'un cryostat rempli d'un fluide cryogénique 2, tel que, de l'hélium liquide, et munie, de deux traversées isolantes 3 et 4, pour chacune des polarités de la ligne.

On n'a représenté, dans la figure, que les éléments relatifs à une seule polarité de la ligne. Il est entendu que les mêmes éléments se reproduisent à l'identique pour l'autre polarité de la ligne.

La traversée 3 comprend deux amenées de courant élémentaires 31 et 32 reliées directement à un premier point P de la ligne L à couper à l'extérieur de la traversée.

La traversée 4 comprend également deux amenées de courant 41 et 42 ; l'amenée 42 sort du cryostat en un point N et est reliée directement à un second point Q de la ligne, tandis que l'amenée 41 est reliée à ce point Q par l'intermédiaire d'un interrupteur 60 aux bornes duquel est connectée une première résistance R1, de faible valeur par exemple 0,1 ohm.

La ligne L est dotée en outre d'un disjoncteur D à faible pouvoir de coupure, inséré entre le point Q et un point S de la ligne.

L'amenée de courant 31 est reliée à l'amenée de courant 41 à l'intérieur du cryostat 1, par un élément d'un bobinage supraconducteur 51, et c'est ce terme qui sera utilisé dans la suite.

De même l'amenée de courant 32 est reliée à l'amenée de courant 42 par un bobinage supraconducteur 52.

Les bobinages sont par exemple réalisés en niobium-titane avec matrice en cupronickel ; le fluide cryogénique est alors de l'hélium liquide.

Les bobinage sont choisis de manière à être identiques et disposés symétriquement par rapport au plan vertical traversant l'axe longitudinal de l'enveloppe du cryostat.

En fonctionnement normal, le disjoncteur D et l'interrupteur 60 sont fermés et la ligne est parcouru par un courant IN.

Ce courant se partage entre les bobinages 51 et 52, et sa répartition est déterminée par les valeurs des résistances des amenées 31, 41, 32 et 42.

Si la somme des résistances de 31 et de 41 est égale à celle des résistances de 32 et de 42, le courant sera également réparti dans les deux bobinages.

Il sera toujours possible d'ajuster cette égalité en insérant en série avec les amenées de courant 41 et 42, à l'extérieur du cryostat, une ou deux résistances de faible valeur telles que les résistances 61 et 62, représentées par les rectangles dans la figure, pour tenir compte de la résistance de contact de l'interrupteur 60 en particulier.

On suppose par exemple que la valeur du courant critique IC, qui fait transiter les bobinages à l'état résistif et qui est sensiblement la même pour les deux bobinages, est égale à

$$1,5 \times \frac{IN}{2},$$

IN étant la valeur de l'intensité nominale de la ligne.

Lorsqu'un courant de défaut atteint une intensité de 1,5 IN, les bobinages 51 et 52 transitent automatiquement à l'état résistif, ce qui provoque instantanément une diminution du courant ; le courant résiduel est coupé par le disjoncteur D.

Si on veut couper un courant d'intensité inférieure à 1,5 IN, par exemple le courant nominal IN, le disjoncteur fonctionne comme suit.

L'interrupteur 60 est ouvert. Ceci crée une tension d'arc équivalente à l'insertion, dans la branche 31, 51, 41, d'une résistance qui déséquilibre la répartition du courant entre les bobinages 51 et 52.

A titre d'exemple 95% de l'intensité du courant peut traverser le bobinage 52 et 5% seulement subsister dans le bobinage 51.

Or, on sait qu'à 0,75 IN le bobinage transite à l'état résistif. Le bobinage 52 qui est traversé par un courant égal à 0,95 IN, donc supérieur à 0,75 IN transite et devient résistif.

La majeure partie du courant est alors commuté dans le bobinage 51, car la résistance de 52 est bien supérieure à celle de la résistance d'arc 60.

Le bobinage 52, traversé à son tour par une intensité supérieure à 0,75 IN, transite également à l'état résistif.

Les deux bobinages étant devenus très résistants, tous les deux limitent la valeur du courant à une valeur suffisamment faible pour permettre au disjoncteur D de le couper définitivement.

Pour mieux couper ce courant résiduel, il est souhaitable que le disjoncteur D possède une grande tension d'arc, par exemple par l'utilisation d'air comprimé sous haute pression ou d'huile soufflé sous haute pression.

Une varistance 71 aux bornes de D permet de limiter les surtensions au moment de la coupure du courant résiduel.

De même, la surtension au moment de la transition peut être limitée aussi par une varistance, telle que la varistance 72 montée entre P et N, soit telle que la varistance 73 montée entre P et S.

Pour réduire l'échauffement des fils supraconducteurs, il est nécessaire d'ouvrir le disjoncteur D en série le plus vite possible, par exemple 10 ou 15 ms après la transition des deux enroulements 51 et 52.

Etant donné la très faible tension rétablie aux bornes de l'interrupteur 60 (inférieure à 100 volts), ce dernier peut être facilement incorporé dans le disjoncteur D.

Dans les hypothèses qui ont été faites d'un courant critique Ic par bobinage supraconducteur égal à 0,75 In et d'une répartition de courant de 95%, 5% entre les deux branches au moment de la coupure, le courant minimal que le disjoncteur à courant continu peut couper est d'environ 0,8 In.

Pour couper un courant inférieur, par exemple égal à 0,55 In, il suffit d'avoir trois bobinages supraconducteurs en parallèle et deux interrupteurs I tel que 60, chaque interrupteur étant shunté par une résistance telle que R1.

L'ouverture successive de ces deux interrupteurs, avec un intervalle de temps de quelques millisecondes permet de faire transiter les trois bobinages supraconducteurs.

Avec trois bobinages de même courant nominal, mais avec courant critique différent, il est possible de n'utiliser qu'un seul interrupteur au lieu de deux.

Plus généralement, on utilisera n éléments supraconducteurs identiques et n-1 interrupteurs constituant n branches en parallèle, n étant égal ou supérieur à 2.

En variante, on utilisera m éléments supraconducteurs ayant des valeurs différentes du courant critique et un seul interrupteur, formant m branches en parallèle avec m supérieur ou égal à 3.

## Revendications

1/ Disjoncteur à courant continu à haute tension, destiné à être inséré entre un premier (P) et un second point (Q) d'une ligne (L) à couper en série dotée d'un disjoncteur (D) classique de faible pouvoir de coupure, caractérisé en ce qu'il comprend un cryostat (1) possédant pour chacune des polarités de ligne, une première (3) et une seconde traversée (4) comprenant chacune au moins deux amenées élémentaires de courant (31, 32, 41, 42) reliées deux à deux à l'intérieur du cryostat par un premier (51) et un second (52) élément supraconducteur, les amenées de la première traversée étant directement reliées à l'extérieur de la traversée audit premier point de ladite ligne à couper, les amenées de la seconde traversée étant reliées à l'extérieur de la traversée au même second point de ladite ligne, l'une au moins directement, l'une au moins des autres par l'intermédiaire d'un interrupteur (60).

2/ Disjoncteur selon la revendication 1, caractérisé en ce que des résistances d'ajustage (61, 62) sont montées en série avec les amenées de courant (41, 42) à l'extérieur de la traversée.

3/ Disjoncteur selon l'une des revendications 1 et 2, caractérisé en ce qu'une résistance (R1) de faible valeur est montée en parallèle sur l'interrupteur.

4/ Disjoncteur selon l'une des revendications 1 à 3, caractérisé en ce qu'une varistance (73) est montée en parallèle sur l'ensemble du disjoncteur à courant continu et dudit disjoncteur classique (D).

5/ Disjoncteur selon l'une de revendications 1 à 4, caractérisé en ce qu'une varistance (72) est montée en parallèle, à l'extérieur du cryostat, sur l'élément supraconducteur (52) non relié à l'interrupteur (60).

6/ Disjoncteur selon l'une des revendications 1 à 5, caractérisé en ce qu'il comprend n éléments supraconducteurs (51, 52) identiques et n-1 interrupteurs (60) formant n branches en parallèle, n étant un entier supérieur ou égal à 2.

7 Disjoncteur selon l'une des revendications 1 à 5, caractérisé en ce qu'il comprend m éléments supraconducteurs ayant des valeurs de courant critique différent et un seul interrupteur, constituant m branches en parallèle, m étant un entier supérieur ou égal à 3.

EP 0 359 125 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-E-095380 (SIEMENS)<br>* page 1, lignes 14 - 19 *<br>* page 5, ligne 6 - page 10, ligne 35 *<br>* page 13, ligne 15 - page 14 *<br>--- | 1, 6 | H02H9/02 |
| A | US-A-3704391 (I-T-E)<br>* colonne 6, ligne 37 - colonne 7, ligne 65;<br>figure 7 *<br>----- | 1 | |

DOMAINES TECHNIQUES RECHERCHES (Int. Cl.5)

H02H
H01L
H01F
H01H

Le présent rapport a été établi pour toutes les revendications

| Lieu de la recherche | Date d'achèvement de la recherche | Examinateur |
|---|---|---|
| LA HAYE | 06 OCTOBRE 1989 | DESMET W.H.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)